# EUROPEAN PATENT SPECIFICATION

(11) **EP 3 193 065 B1**
(45) Date of publication and mention of the grant of the patent: **28.11.2018**
(21) Application number: 16151404.7
(22) Date of filing: 15.01.2016
(51) Int. Cl.: F16K 43/00, F16K 1/52, F24D 19/10, F16K 27/02, F16K 37/00, G05D 23/02

(54) **VALVE, IN PARTICULAR HEAT EXCHANGER VALVE**
VENTIL, INSBESONDERE WÄRMETAUSCHERVENTIL
SOUPAPE, NOTAMMENT SOUPAPE D'ÉCHANGEUR DE CHALEUR

(43) Date of publication of application: 19.07.2017
(73) Proprietor: Danfoss A/S, 6430 Nordborg (DK)
(72) Inventor: Clausen, Anders Østergaard, 8680 Ry (DK); Hølck, Poul, 8300 Odder (DK)
(74) Representative: Keil & Schaafhausen Patent- und Rechtsanwälte PartGmbB

(56) References cited:
- EP-A2- 1 959 202
- WO-A1-2006/080036

## Description

The present invention relates to a valve, in particular a heat exchanger valve according to the preamble of claim 1.

The heat exchanger valve according to the present invention can be used in connection with a radiator or in connection with a floor heating system. The heat exchanger valve is used to control the flow of a heating fluid, for example hot water, through the heat exchanger.

In many cases such a heat exchanger valve is controlled by a thermostatic actuator. When a temperature in a room is lower than a set temperature, the heat exchanger valve opens and hot water flows through the heat exchanger valve and through the heat exchanger. When the temperature is sufficiently high, the valve is closed and the flow of heating fluid is decreased or interrupted. The heating fluid and the valve cool down.

In order to deal with changing temperatures, the valve housing is made of metal. The same is true for the other parts of the valve with the exception of some sealing means. This makes the production of such a valve complicated and time consuming. The valve housing must be machined in order to produce a thread in which the valve top can be screwed.
WO 2006/080036 A1 shows a device to control a fluid flow path comprising a main body having a channel for the fluid and to be connected to a heating system. A secondary body is mounted rotatingly onto the main body and carries a knob for adjusting a set point of a temperature.
EP 1 959 202 A2 shows a thermostatic control device for radiator valves which is coupled to a valve housing and comprises a thermostat inside a rotory control knob.

The object underlying the present invention is to provide for a heat exchanger valve which can be produced with low costs.

This object is solved with a heat exchanger valve as described at the outset. The valve top is a part of the heat exchanger valve which is inserted into the opening of the valve housing and fixed to the valve housing. The valve top is an element which is used to hold some of the functional parts of the valve, like a valve element, a stem, a stuffing box and so on, in the proper position. The other functional elements can be made of plastic material as well although this is not a requirement. The housing can be made of metal. When the valve top is made of plastic material it can be produced by molding so that time producing machining steps can be avoided.

Preferably, said valve top and said valve housing are connected to each other by means of a snap connection. A snap connection can be established simply by pressing the valve top into the opening of the valve housing. This makes assembling of the valve easy. Furthermore, a snap connection does not require the machining of a thread. The valve top can be held within the housing reliably by a snap connection which would not be the case with a threaded connection since the changing temperatures could change characteristics, for example dimensions, of the plastic valve top element.

In a preferred embodiment said snap connection comprises a protrusion at one of said parts housing in valve top and a recess carrying part at the other one of said parts housing and valve top. When the valve top is pressed into the opening of the valve housing the protrusion comes to rest behind the recess of the recess carrying part. To this end, a certain elasticity is required so that the protrusion can be moved behind the recess carrying part. However, a plastic material is sufficiently elastic.

Preferably, at least one of said protrusion and said recess carrying part comprises a wedge like glide surface. This simplifies establishing of the snap connection. When the valve top is pressed into the opening of the valve housing, the wedge like part causes the protrusion to be moved laterally so that it can pass the recess carrying part and snap into the recess.

Alternatively or additionally said snap connection comprises a spring ring and a groove in said housing and a matching groove on said valve top. When the snap connection is established, the spring ring is positioned in the groove in the housing and in the matching groove of the valve top.

In a preferred embodiment said valve top has a valve top geometry and said opening has an opening geometry, wherein a cooperation of said valve top geometry and said opening geometry prevents mounting of said valve top in said opening in not allowed angular positions. In many cases it is intended to mount the valve top in only one or two angular positions within the valve housing. This angular position can be used, for example, to define the flow direction of the heating fluid through the heat exchanger valve. Other angular positions of the valve top within the opening are not desired and therefore prohibited. A simple way to avoid a situation in which the valve top is moved in a wrong angular position is to adapt the valve top geometry and the opening geometry to each other in such a way that the two geometries match only in one or very few angular positions.

It is in particular preferred that said cooperation allows mounting of said valve top in said opening in a single angular position only.

In a preferred embodiment in a first insertion position said valve top is rotatable within said opening and in a second insertion position passed said first insertion position said valve top is secured against rotation. During mounting the valve top is inserted into the opening of the valve housing in a translational movement. Since the valve top should tightly be accommodated in the opening of the valve housing, some force is required to press the valve top into the opening. In this situation it might be advantageous to rotate the valve top relative to the opening in the valve housing to facilitate the start of the insertion. However, when the valve top is moved further into the opening of the valve housing such a rotational movement is no longer necessary and the cooperation of the valve top geometry and the opening geometry starts to indicate the correct position of the valve top in the valve housing.

Preferably a connection between said valve top and said valve housing can be established only after said second insertion position has been reached by said valve top. If the snap connection which is mentioned above is used to connect the valve top and the valve housing, this snap connection is established only in the second insertion position or when said valve top has passed said second insertion position.

In a simple embodiment said valve top geometry comprises at least one protrusion and said opening geometry comprises at least one cut-out adapted to said protrusion. The cut-out can be made in a wall surrounding the opening of the valve housing. This has the advantage that a worker can visually control the angular position of the valve top within the valve housing. In a preferred embodiment said protrusion comprises a window in an outer surface through which a presetting indicator is visible. This window can be located in a radially outer surface of the valve top so that it can be seen from the side of the valve housing. It can be located as well in a surface of the valve top facing away from the valve housing.

In this case it is preferred that said window is located outside a mounting area of a valve actuator. The presetting indicator is then visible even if the valve actuator is mounted.

Preferred embodiments of the invention will now be described in more detail with reference to the drawings, wherein:
- Fig. 1: is a perspective view of a heat exchanger valve,
- Fig. 2: is a sectional view of the heat exchanger valve,
- Fig. 3: is a further sectional view through the heat exchanger valve in another direction,
- Fig. 4: is an enlarged sectional view corresponding to that of Fig. 3 of another embodiment of a heat exchanger valve,
- Fig. 5 to 7: are perspective views of another embodiment of a heat exchanger valve from the outside.

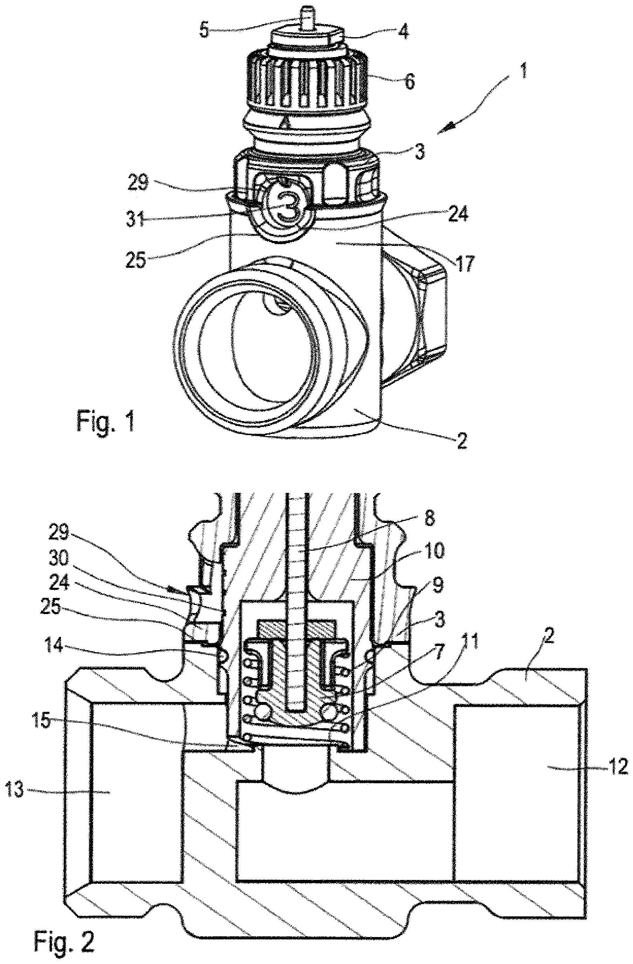

Fig. 1 shows a heat exchanger valve 1 having a valve housing 2 which can be made of metal, for example, brass and a valve top 3. The valve top 3 is made of a plastic material.

The valve top 3 carries functional parts of the heat exchanger valve like a stuffing box 4 with a pin 5 and a presetting handle 6 in form of a wheel. Furthermore, the valve top 3 carries (Fig. 2) a valve element 7, a stem 8 connected to the valve element 7 to control a position of the valve element 7, and an opening spring 9. The last mentioned parts are located within a valve top insert 10 which is located within the valve top 3.

The valve housing 2 comprises a valve seat 11 positioned between an inlet 12 and an outlet 13.

Schematically shown are sealing means 14 between the insert 10 and the valve housing 2.

The insert 10 is rotatably mounted within the valve top 3. It can be actuated by the presetting handle 6 in order to adjust a presetting opening 15. When the insert 10 is rotated, the valve top 3 is held secured against rotation within the housing 2.

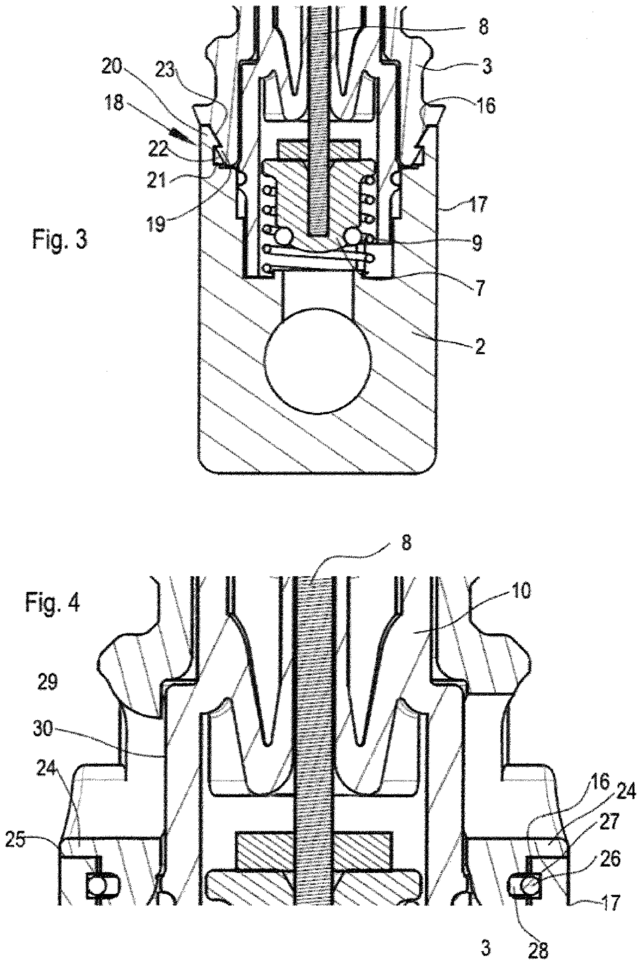

As can be seen in Fig. 3 the valve top 3 is mounted within an opening 16 in the valve housing 2. This opening is surrounded by a wall 17 which is part of the valve housing 2.

The valve top 3 is connected to the valve housing 2 by means of a snap connection 18. In a first embodiment the snap connection 18 comprises a protrusion 19 at the valve top 3, said protrusion 19 facing radially outwardly. Furthermore, the snap connection 18 comprises a recess carrying part 20 defining a recess 21. The protrusion 19 comprises a wedge like surface 22 and the recess carrying part 20 comprises a wedge like surface 23. Since the valve top 3 is made of a plastic material it shows a certain elasticity. When the valve top 3 is pressed into the opening 16 the cooperation of the two wedge like surfaces 22, 23 presses the protrusion 19 radially inwardly. When the protrusion 19 has passed the recess carrying part 20 it moves radially outwardly to enter the recess 21 and to establish the snap connection 18. To this end, the valve top 3 must be moved far enough into the opening 16 in the valve housing 2. However, such a movement is possible only in a predefined angular position in the valve top 3 in the opening 16. This can be seen in Fig. 1 and 2.

The wall 17 of the valve housing 2 comprises a cut-out 24 defining an opening geometry. The valve top comprises a protrusion 25 defining a valve top geometry. The opening geometry and the valve top geometry cooperation prevent mounting of the valve top 3 in the opening 16 in not allowed angular positions. In other words, when the valve top 3 is not in the desired angular position within opening 16 it has to be rotated until the protrusion 25 can enter the cut-out 24. Only when the protrusion 25 has entered cut-out 24, the valve top 3 can be pushed far enough into the opening 16 to establish the snap connection 18. This means that the valve top 3 can be rotated in opening 16 in a first insertion position in which the protrusion 25 has not entered the cut-out 24. When the valve top 3 is moved further it comes into a second insertion position which is past said first insertion position and in which the protrusion 25 has been inserted into a cut-out 24 to prevent further rotation of the valve top 3 in the valve housing 2 so that the valve top 3 has the desired angular position within the valve housing 2.

As can be seen in Fig. 3 it is preferably that at least two pairs of recess 21 and protrusion 19 are provided. It is possible to use more of such pairs and to distribute them evenly in circumferential direction or to make one of them or both as a ring.

Fig. 4 shows another possibility to establish a snap connection. Same parts as in Fig. 1 to 3 are designated with the same reference numerals. This snap connection can be used alternatively or additionally to the snap connection shown in Fig. 3.
The snap connection according to Fig. 4 comprises a spring ring 26 which is accommodated within a groove 27 in wall 17 of opening 16 and at the same time in a groove 28 in the valve top 3.

Furthermore, the embodiment of Fig. 4 shows two protrusions 24. When these protrusions 24 have an angular distance of 180° the valve top 3 can be mounted in the valve housing in two different angular positions. When the two protrusions 24 have an angular difference not equal to 180° the valve top can be mounted within valve housing 2 in one angular position only.

As can be seen in Fig. 2 and 4 the protrusions 24 comprise a window 29 through which a radially outer surface 30 of valve top insert 10 is visible. This surface 30 can be marked with a presetting indicator 31. This presetting indicator 31 can be in form of a numbers, in form of colors, in form of a wedge like marking or in another way. Such a marking allows for a visual control of the presetting position of the valve top insert 10 within the valve top 3. In the embodiments shown in Fig. 1 to 4 this presetting indicator is provided on a radially outer surface 30 of the insert 10 so that the presetting indicator can be seen from the side of the valve housing 2.

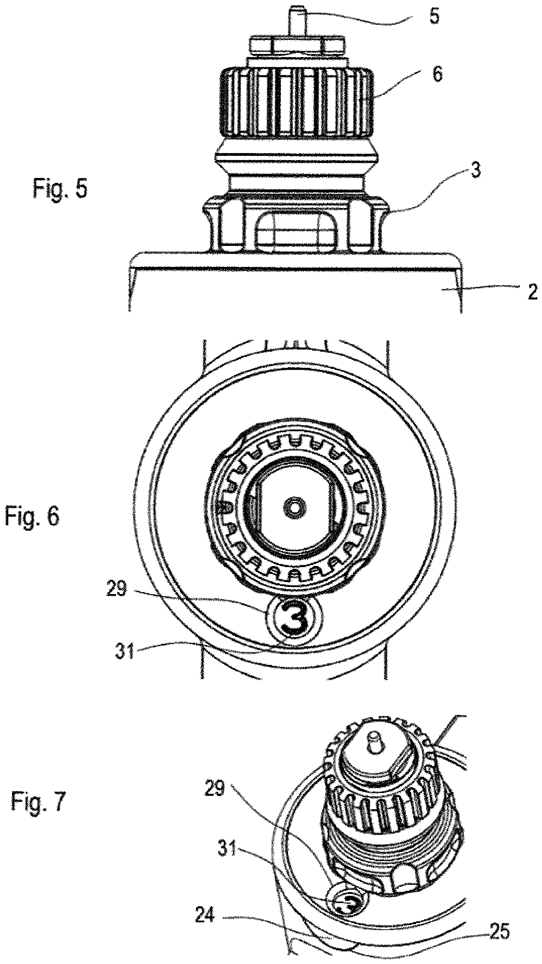

Fig. 5 to 7 show another possibility. Here a window 29 is positioned on a top side of the protrusion 24 so that the presetting indicator 31 can be seen from the top of the heat exchanger valve 1.

In the embodiment shown in Fig. 1 to 4 the presetting indicator 31 can be seen even if a valve actuator is mounted on the heat exchanger valve 1. Even in the embodiment shown in Fig. 5 to 7 the presetting indicator 31 can be seen when the valve actuator is mounted.

In the present embodiments the cut-outs 25 are shown in the form of semicircles. However, they can have other forms, for example triangle, square or the like.

## Claims

1. Valve, in particular heat exchanger valve (1) comprising a valve housing (2) and a valve top (3) made of plastic material and carrying a stuffing box (4) with a pin (5) and presetting handle (6), wherein the valve top (3) is inserted into an opening (16) in said valve housing (2),
**characterized in that** said valve top carries an insert (10) which is rotatably mounted within the valve top and can be actuated by the presetting handle (6) in order to adjust a presetting opening (15), and **in that** said valve top further carries a valve element (7), a stem (8) connected to the valve element (7), and an opening spring (9).

2. Valve according to claim 1, **characterized in that** said valve top (3) and said valve housing (2) are connected to each other by means of a snap connection (18).

3. Valve according to claim 2, **characterized in that** said snap connection (18) comprises a protrusion (19) at one of said parts valve housing (2) and valve top (3) and a recess carrying part (20) at the other one of said parts valve housing (2) and valve top (3).

4. Valve according to claim 3, **characterized in that** at least one of said protrusion (19) and said recess carrying part (20) comprises a wedge like glide surface (22, 23).

5. Valve according to claim 2 to 4, **characterized in that** said snap connection (18) comprises a spring ring (26) and a groove (27) in said valve housing (2) and a matching groove (28) on said valve top (3).

6. Valve according to any of claims 1 to 5, **characterized in that** said valve top (3) has a valve top geometry and said opening (16) has an opening geometry, wherein a cooperation of said valve top geometry and said opening geometry prevents mounting of said valve top (3) in said opening (16) in not allowed angular positions.

7. Valve according to claim 6, **characterized in that** said cooperation allows mounting of said valve top (3) in said opening (16) in a single angular position only.

8. Valve according to claim 6 or 7, **characterized in that** in a first insertion position said valve top (3) is rotatable within said opening (16) and in a second insertion position past said first insertion position said valve top (3) is secured against rotation.

9. Valve according to claim 8, **characterized in that** a connection between said valve top (3) and said valve housing (2) can be established only after said second insertion position has been reached by said valve top (3).

10. Valve according to any of claims 6 to 9, **characterized in that** said valve top geometry comprises at least one protrusion (24) and said opening geometry comprises at least one cut-out (25) adapted to said protrusion (24).

11. Valve according to claim 10, **characterized in that** said protrusion (24) comprises a window (29) in an outer surface through which a presetting indicator (31) is visible.

12. Valve according to claim 11, **characterized in that** said window (29) is located outside a mounting area of a valve actuator.

## Patentansprüche

1. Ventil, insbesondere Wärmetauscherventil (1), umfassend ein Ventilgehäuse (2) und ein Ventiloberteil (3), das aus einem Kunststoffmaterial hergestellt ist und eine Stopfbuchse (4) mit einem Stift (5) und einen Voreinstellgriff (6) aufweist, wobei das Ventiloberteil (3) in eine Öffnung (16) des Ventilgehäuses (2) eingesetzt ist,
**dadurch gekennzeichnet, dass** das Ventiloberteil einen Einsatz (10) aufweist, der drehbar innerhalb des Ventiloberteils montiert ist und von dem Voreinstellgriff (6) betätigbar ist, um eine Voreinstellöffnung (15) zu justieren, und dass das Ventiloberteil ferner ein Ventilelement (7), einen mit dem Ventilelement (7) verbundenen Schaft (8) und eine Öffnungsfeder (9) aufweist.

2. Ventil nach Anspruch 1, **dadurch gekennzeichnet, dass** das Ventiloberteil (3) und das Ventilgehäuse (2) miteinander mithilfe einer Schnappverbindung (18) verbunden sind.

3. Ventil nach Anspruch 2, **dadurch gekennzeichnet, dass** die Schnappverbindung (18) einen Vorsprung (19) an einem der Teile Ventilgehäuse (2) und Ventiloberteil (3) und ein eine Vertiefung aufweisendes Teil (20) an dem anderen der Teile Ventilgehäuse (2) und Ventiloberteil (3) aufweist.

4. Ventil nach Anspruch 3, **dadurch gekennzeichnet, dass** mindestens eines des Vorsprungs (19) und des eine Vertiefung aufweisenden Teils (20) eine keilförmige Gleitfläche (22, 23) umfasst.

5. Ventil nach Anspruch 2 bis 4, **dadurch gekennzeichnet, dass** die Schnappverbindung (18) einen Federring (26) und eine Nut (27) im Ventilgehäuse (2) und eine entsprechende Nut (28) am Ventiloberteil (3) umfasst.

6. Ventil nach Anspruch 1 bis 5, **dadurch gekennzeichnet, dass** das Ventiloberteil (3) eine Ventiloberteilgeometrie hat und dass die Öffnung (16) eine Öffnungsgeometrie hat, wobei ein Zusammenwirken der Ventiloberteilgeometrie und der Öffnungsgeometrie das Montieren des Ventiloberteils (3) in der Öffnung (16) in nicht zulässigen Winkelpositionen verhindert.

7. Ventil nach Anspruch 6, **dadurch gekennzeichnet, dass** das Zusammenwirken das Montieren des Ventiloberteils (3) in der Öffnung (16) in nur einer einzigen Winkelposition zulässt.

8. Ventil nach Anspruch 6 oder 7, **dadurch gekennzeichnet, dass** das Ventiloberteil (3) in einer ersten Einsetzposition drehbar innerhalb der Öffnung (16) ist und das Ventiloberteil (3) in einer zweiten Einsetzposition nach der ersten Einsetzposition gegen Drehung gesichert ist.

9. Ventil nach Anspruch 8, **dadurch gekennzeichnet, dass** eine Verbindung zwischen dem Ventiloberteil (3) und dem Ventilgehäuse (2) erst dann eingerichtet werden kann, nachdem die zweite Einsetzposition von dem Ventiloberteil (3) erreicht ist.

10. Ventil nach einem der Ansprüche 6 bis 9, **dadurch gekennzeichnet, dass** die Ventiloberteilgeometrie mindestens einen Vorsprung (24) umfasst und die Öffnungsgeometrie mindestens einen Ausschnitt (25) umfasst, der an den Vorsprung (24) angepasst ist.

11. Ventil nach Anspruch 10, **dadurch gekennzeichnet, dass** der Vorsprung (24) ein Fenster (29) in einer Außenfläche umfasst, durch das eine Voreinstellanzeige (31) sichtbar ist.

12. Ventil nach Anspruch 11, **dadurch gekennzeichnet, dass** sich das Fenster (29) außerhalb eines Montagebereichs eines Ventilstellglieds befindet.

## Revendications

1. Soupape, en particulier soupape d'échangeur de chaleur (1) comprenant un boîtier de soupape (2) et un couvercle de soupape (3) en matière plastique et portant un presse-étoupe (4) avec une broche (5) et une poignée de préréglage (6)
dans laquelle le
le couvercle de soupape (3) est inséré dans une ouverture (16) dans ledit boîtier de soupape (2),
**caractérisée en ce que** ledit couvercle de soupape porte un insert (10) qui est monté rotatif à l'intérieur du couvercle de soupape et peut être actionné par la poignée de préréglage (6) afin de régler une ouverture de préréglage (15), et **en ce que** ledit couvercle de soupape porte en outre un élément de soupape (7), une tige (8) reliée à l'élément de soupape (7) et un ressort d'ouverture (9).

2. Soupape selon la revendication 1, **caractérisée en ce que** le couvercle de soupape (3) et le boîtier de soupape (2) sont reliés l'un à l'autre au moyen d'une liaison par encliquetage (18).

3. Soupape selon la revendication 2, **caractérisée en ce que** ladite liaison par encliquetage (18) comprend une saillie (19) au niveau de l'une desdites parties du boîtier de soupape (2) et du couvercle de soupape (3) et une partie portant un évidement (20) au niveau de l'autre partie dudit boîtier de soupape (2) et du couvercle de soupape (3).

4. Soupape selon la revendication 3, **caractérisée en ce qu'**au moins l'une desdites protubérances (19) et de ladite partie portant l'évidement (20) comprend une surface de glissement (22, 23) en forme de coin.

5. Soupape selon la revendication 2 à 4, **caractérisée en ce que** ladite liaison par encliquetage (18) comprend un anneau élastique (26) et une rainure (27) dans ledit boîtier de soupape (2) et une rainure d'adaptation (28) sur ledit couvercle de soupape (3).

6. Soupape selon l'une quelconque des revendications 1 à 5, **caractérisée en ce que** ledit couvercle de soupape (3) a une géométrie de couvercle de soupape et ladite ouverture (16) a une géométrie d'ouverture, dans laquelle une coopération de ladite géométrie de couvercle de soupape et de ladite géométrie d'ouverture empêche le montage dudit couvercle de soupape (3) dans ladite ouverture (16) dans des positions angulaires non autorisées.

7. Soupape selon la revendication 6, **caractérisée en ce que** ladite coopération permet le montage dudit couvercle de soupape (3) dans ladite ouverture (16) dans une seule position angulaire.

8. Soupape selon la revendication 6 ou 7, **caractérisée en ce que**, dans une première position d'insertion, ledit couvercle de soupape (3) peut tourner dans ladite ouverture (16) et, dans une seconde position d'insertion après ladite première position d'insertion, ledit couvercle de soupape (3) est fixé contre la rotation.

9. Soupape selon la revendication 8, **caractérisée en ce qu'**une liaison entre ledit couvercle de soupape (3) et ledit boîtier de soupape (2) ne peut être établie qu'après que ladite seconde position d'insertion a été atteinte par ledit couvercle de soupape (3).

10. Soupape selon l'une quelconque des revendications 6 à 9, **caractérisée en ce que** ladite géométrie du couvercle de soupape comprend au moins une protubérance (24) et ladite géométrie d'ouverture comprend au moins une découpe (25) adaptée à ladite protubérance (24).

11. Soupape selon la revendication 10, **caractérisée en ce que** ladite protubérance (24) comprend une fenêtre (29) dans une surface extérieure à travers laquelle un indicateur de préréglage (31) est visible.

12. Soupape selon la revendication 11, **caractérisée en ce que** ladite fenêtre (29) est située à l'extérieur d'une zone de montage d'un actionneur de soupape.
